# EUROPÄISCHE PATENTSCHRIFT

(11) **EP 3 611 483 B1**
(45) Veröffentlichungstag und Bekanntmachung des Hinweises auf die Patenterteilung: **19.07.2023**
(21) Anmeldenummer: 19191200.5
(22) Anmeldetag: 12.08.2019
(51) Int. Cl.: G01J 1/02, G01J 1/04, G01J 1/42

(54) **MESSGERÄT UND VERFAHREN ZUR BESTIMMUNG DES VERHÄLNISSES VON DIFFUSEM LICHT ZU DIREKTEM LICHT**
MEASURING DEVICE AND METHOD FOR DETERMINING THE RATIO OF DIFFUSE LIGHT AND DIRECT LIGHT
APPAREIL DE MESURE ET PROCÉDÉ DE DÉTERMINATION DU RAPPORT ENTRE RAYONNEMENT DIRECT ET RAYONNEMENT DIFFUS

(30) Priorität: 14.08.2018 DE 102018119777
(43) Veröffentlichungstag der Anmeldung: 19.02.2020
(73) Patentinhaber: Felsch Lighting Design GmbH, 22765 Hamburg (DE)
(72) Erfinder: Felsch, Markus, 22765 Hamburg (DE)
(74) Vertreter: Groth, Wieland

(56) Entgegenhaltungen:
- EP-A1- 2 508 856
- DE-C- 678 876
- MICHAEL J. CRUSE ET AL: "Using a Simple Apparatus to Measure Direct and Diffuse Photosynthetically Active Radiation at Remote Locations", PLOS ONE, Bd. 10, Nr. 2, 10. Februar 2015 (2015-02-10), Seite e0115633, XP055648081, DOI: 10.1371/journal.pone.0115633

## Beschreibung

Die Erfindung betrifft ein Messgerät mit einem Schattengeber. Die Erfindung betrifft auch ein Verfahren zur Bestimmung einer Lichthärte.

In der DD 40744 (A1) ist ein Verfahren bzw. eine Vorrichtung zum Messen der Schattigkeit offenbart. Dort sind zwei Fotoelemente vorgesehen, die mit ihren Rückseiten aneinander befestigt sind, und es werden Beleuchtungsstärken des oberen und des unteren Fotoelementes bestimmt, und daraus wird die Schattigkeit bestimmt.

In der DD 59407 (A1) ist gleichfalls eine Vorrichtung zum Messen der Schattigkeit offenbart, bei der zwei Fotoelemente mit ihren Rückseiten aneinander in einer Halterung befestigt sind. In der DE 20 2012 007 507 U1 ist ein Lichtbewertungswerkzeug offenbart, bei dem ein Benutzer subjektiv die Lichtstärke über eine entsprechende Vorrichtung bewertet.

In der EP 2 508 856 A1 ist ein Verfahren zur Bestimmung der Lichtstärke des direkten und diffusen Lichtes der Sonnenstrahlung offenbart. Dabei wird die Gesamtlichtstrahlung gemessen und entweder die Stärke des diffusen oder die Stärke des direkten Lichtes und durch die Differenzbildung die Stärke des nicht gemessenen Lichtes bestimmt.

Im Artikel "Using a simple apparatus to measure direct and diffuse photosynthetically active radiation at remote loactions" in PLOS ONE vom 10. Februar 2015 von Michael J. Cruse et al. wird photosynthetisch aktive Strahlung beschrieben, die den CO₂-, Wasser- und Energiezyklus in einem Erdboden-Pflanzen-Atmosphärensystem antreibt.

Aus der DE 678 876 ist eine Vorrichtung zum Messen von Schattigkeiten bekannt, die lichtelektrische Zellen zur Schattenmessung heranzieht. Dabei ist der Schattenwerfer so ausgebildet, dass der Schattenwerferwinkel so klein festgesetzt wird, dass er nur noch punktförmige Lichtquellen umfasst.

Bei der Ausleuchtung von Räumen oder Umgebungen ist neben der reinen Lichtstärke oder Beleuchtungsstärke beziehungsweise Strahlungsintensität auch von Belang, ob es sich bei der Beleuchtung um diffuses Licht oder direktes Licht handelt. Von direktem Licht spricht man, wenn von einer Lichtquelle Licht gerichtet ausgesendet wird. Bei vollständig diffusem Licht ist die Strahlungsintensität an jedem Punkt aus jeder Richtung gleich groß.

Aufgabe der vorliegenden Erfindung ist es, ein Messgerät zur Verfügung zu stellen, mit dem eine Lichthärte von Licht bestimmbar ist. Es ist auch Aufgabe der Erfindung, ein Verfahren zur Bestimmung der Lichthärte zur Verfügung zu stellen.

Die Aufgabe wird in ihrem ersten Aspekt durch ein eingangs genanntes Messgerät mit den Merkmalen des Anspruchs 1 gelöst.

Zur Erklärung des Messgerätes wird als neue physikalische Größe eine Lichthärte eingeführt. Bei der Lichthärte handelt es sich um eine dimensionslose Größe, die das Verhältnis des direkten Lichtes zum diffusen Licht ausdrückt. Diffuses Licht wird als weich bezeichnet und gerichtetes Licht als hart. Das Licht wird auch so empfunden. Grundsätzlich ist das Licht umso härter, je gerichteter das Licht ist.

Erfindungsgemäß wird ein Messgerät gemäss Anspruch 1 vorgeschlagen, welches einen Schattengeber aufweist, der je nach Umgebungslicht unterschiedlich große Kern- und Halbschatten erzeugt. Er umfasst eine Lichtmesseinrichtung mit einer Sensorfläche, auf der die Kern- und Halbschatten des Schattengebers erzeugt werden.

Mit der Lichtmesseinrichtung steht eine Auswerteeinrichtung datenleitend, vorzugsweise elektrisch leitend in Verbindung. Die Auswerteeinrichtung ist datenleitend mit einem Datenspeicher verbunden, in dem eine Lichthärteskala abgelegt ist. Die Lichthärteskala ist eindimensional ausgebildet. Die Lichthärteskala reicht von einem minimalen Grenzwert vorzugsweise kontinuierlich zu einem maximalen Grenzwert. Zwischen dem minimalen und dem maximalen Grenzwert sind die Lichthärtewerte angeordnet. Aus Größen des Halbschattens wird ein Wert einer Lichthärte bestimmt. Es können auch Größen des Kernschattens hinzugezogen werden, um die Lichthärte zu bestimmen. Unter einer Größe wird hier nicht nur eine Fläche verstanden, sondern gemäss der beanspruchten Erfindung eine Flankensteigung des Halbschattens. Alternative können ederandere auch aus Messgrößen abgeleitete Größen verwendet werden.

Erfindungsgemäss wird eine Flankensteigung des Halbschattens aus Messwerten bestimmt und einer Lichthärte zugeordnet.

Es können aber auch aus den Größen der Flächen von Kern- und Halbschatten, Größenverhältnisse ermittelt und diese einer Lichthärte zuordnet werden. Es kann auch die Größe der Fläche des Halbschattens einer Lichthärte zugeordnet werden. Der Begriff der Größe und der Begriff des Verhältnisses sind hier allgemein zu verstehen. Vorzugsweise wird unter Größe die Fläche des jeweiligen Schattens verstanden. Unter Verhältnis kann ein Quotient, aber auch eine Differenz oder ein anderer Zusammenhang verstanden werden.

Unter einer Lichtmesseinrichtung ist eine Beleuchtungsstärkenmesseinrichtung zu verstehen, die den Lichtstrom pro Fläche misst. Die Einheit der Beleuchtungsstärke ist Lux. Es kann aber auch eine Lichtstärkenmesseinrichtung vorliegen. Die Einheit der Lichtstärke oder Lichtintensität ist Candela.

Vorzugsweise wird einem ausschließlich diffusen Umgebungslicht eine Lichthärte von -100 zugeordnet und einem ausschließlich gerichteten Licht eine Lichthärte von +100 zugeordnet. Die Zahlenangeben sind jedoch im Wesentlichen willkürlich, und man könnte auch andere Ober- und Untergrenzwerte wählen. Alle anderen Ober- und Untergrenzwerte sind hier auch offenbart.

Erfindungsgemäss ist der Schattengeber über der Sensorfläche drehbar angeordnet. Bei dem Schattengeber kann es sich beispielsweise um einen schmalen und dünnen Balken handeln, der über seine gesamte Ausdehnung die gleiche Breite und Dicke aufweist. Der Balken kann mit seiner flachen Seite parallel zur Sensorfläche angeordnet und ihr gegenüber drehbar angeordnet sein. Dazu kann günstigerweise ein vorzugsweise rohrförmiges Gehäuse mit einem offenen Ende für Umgebungslichteinfall vorgesehen sein und mit einem Boden, an dem die Sensorfläche angeordnet ist. Der Boden kann kreisförmig ausgebildet sein und durch die Sensorfläche gebildet werden. An dem offenen Ende kann eine Dreheinrichtung vorgesehen sein, an der der Schattengeber befestigt ist. Beispielsweise kann der Schattengeber hierbei mit Hilfe von zwei Nuten auf einem offenen Rand des rohrförmigen Gehäuses drehbar gelagert sein; es sind natürlich auch andere Befestigungsmöglichkeiten denkbar.

Erfindungsgemäss weist die Sensorfläche eine Vielzahl von Sensoren auf. Es können hunderte, tausende oder zehntausende von Sensoren vorgesehen sein, die sich über die gesamte Sensorfläche verteilen. Dadurch ist es möglich, einen Beleuchtungsstärkeverlauf entlang der Sensorfläche zu detektieren und der Auswertung zugrunde zu legen.

Vorzugsweise ist die Sensorfläche als herkömmliche CCD Sensorfläche ausgebildet. Bei einem CCD Sensor handelt es sich um ein lichtempfindliches elektronisches Bauelement mit einer Vielzahl vorzugsweise gleichgroßer Fotoelemente, wobei der vom Fotoelement erzeugte elektrische Strom ein Maß für die Beleuchtungsstärke des auf das Fotoelement fallenden Lichtes ist. Die Beleuchtungsstärke ist ein Maß für die Anzahl der pro Zeiteinheit auf eine Fläche treffender Photonen und damit ein Maß für die Anzahl an Elektronen, die im Halbleiter des Fotoelementes in das Leitungsband gehoben werden und den elektrischen Strom bilden.

In der Auswerteeinheit ist ein Speicher für vorzugsweise wenigstens Schwellenwerte der Beleuchtungsstärke vorgesehen, die den Kernschatten von dem Halbschatten und von der schattenfreien Beleuchtung unterscheiden. Die Beleuchtungsstärkenmesswerte der einzelnen Fotoelemente sind in der Auswerteeinheit dahingehend auswertbar, ob bei ihnen ein Kern- oder Halbschatten vorliegt oder gar kein Schatten. Aus den Messwerten sind Größen der beiden Schatten, insbesondere Flächen der beiden Schatten ermittelbar und in ein Verhältnis zueinander setzbar. Das Verhältnis ist Punkten oder Werten auf einer Lichthärteskala eindeutig zuordenbar.

Die Aufgabe wird hinsichtlich des Verfahrens durch ein Verfahren mit den Merkmalen des Anspruchs 4 gelöst.

Das Verfahren eignet sich zur Durchführung auf einem oder jedem der oben beschriebenen Messgeräte, umgekehrt eignet sich jedes der oben beschriebenen Messgeräte zur Durchführung des erfindungsgemäßen Verfahrens.

Erfindungsgemäß wird zunächst eine Lichthärteskala bestimmt wird, indem ein minimaler Grenzwert und ein maximaler Grenzwert festgelegt werden und dem minimalen Grenzwert diffuses Licht und dem maximalen Grenzwert gerichtetes Licht zugeordnet wird oder umgekehrt und Lichthärtewerte zwischen den Grenzwerten interpoliert werden. Vorzugsweise entspricht jeder Lichthärtewert einem bestimmten Anteilverhältnis von diffusem und gerichtetem Licht.

Die Lichthärteskala wird in einem Speicher einer Auswerteeinrichtung abgelegt.

Durch einen Schattengeber wird ein Schatten erzeugt. Es werden Größen von Kern- und/oder Halbschatten des Schattens ermittelt. Die Größen von Kern- und/oder Halbschatten können ausgewertet werden und die Werte einer Lichthärte der Lichthärteskala zugeordnet. Sie können in ein Verhältnis zueinander gesetzt werden, wobei dem Größenverhältnis wird eine Lichthärte zugeordnet wird. Erfindungsgemäss wird eine Flankensteigung des Halbschattens ermittelt, die vorzugsweise zwischen 0° und 90° liegt, günstigerweise wird dann jeder Steigung eine Lichthärte zugeordnet. Die Werte von Kern- und/oder Halbschatten sind vorab empirisch oder anderweitig jeweils einer Lichthärte zugeordnet.

Es wird mit dem Schattengeber ein Schatten auf der Sensorfläche erzeugt. Die Sensorfläche weist eine Vielzahl über die Sensorfläche verteilter Sensoren auf, die jeweils eine Beleuchtungsstärke messen. Beleuchtungsstärkemesswerte der Sensoren werden der Auswerteeinrichtung zugeführt, die einen Beleuchtungsstärkeverlauf entlang der Sensorfläche, entlang einer Linie, ermittelt. Aus dem Beleuchtungsstärkeverlauf werden Bereiche oder Abschnitte von Halb- und Kernschatten ermittelt.

Erfindungsgemäss wird entlang einer Line des Beleuchtungsstärkeverlaufs eine Flankensteigung des Halbschattens bestimmt, und der Flankensteigung wird eine Lichthärte zugeordnet. Bei der ermittelten Größe handelt es sich um die Flankensteigung des Halbschattens.

Bei der Größe handelt es sich in einer nicht beanspruchten Ausführungsform um die flächenmäßige Ausdehnung des Kernschattens und des Halbschattens.

Zur Ermittlung der zu verwertenden Flankensteigung wird der Schattengeber in Schritten, vorzugsweise in 180 Ein-Grad-Schritten gedreht, und für jeden der Schritte wird ein Halbschatten erzeugt. Es wird von den vorzugsweise 180 Messungen diejenige gesucht, bei der der Kernschatten am schmalsten ist. Dort sind Verzerrung und Parallaxefehler durch seitlich auftreffendes Licht am geringsten. Es wird eine Flankensteigung für jeden der Halbschatten bestimmt, und die steilste Flankensteigung wird ermittelt, und die steilste Flankensteigung wird ausgewählt und der Lichthärte zugeordnet. Oder es kann die Messung mit dem schmalsten Kernschatten ausgewählt werden und dessen Flankensteigung bestimmt und der Lichthärte zugeordnet. Beide Verfahren führen vorzugsweise zum selben Ergebnis. Alternativ wird der Schattengeber mit der Sensorfläche zusammen und positionsfest gegenüber der Sensorfläche gedreht, vorzugsweise ebenfalls in Ein-Grad-Schritten.

Die Flankensteigung kann entlang einer relativ zum Schattengeber positionsfesten Auswertelinie ermittelt werden. Die Auswertelinie dreht sich in den Messschritten über die Sensorfläche. Die Position der Auswertelinie wird vorab bestimmt. Sie kann mittig am Schattengeber angeordnet sein.

Es werden somit zunächst mehrere Messungen, vorzugsweise 180 Messungen, durchgeführt und die jeweiligen Halbschatten bestimmt. Es wird die Stellung des Schattengebers gegenüber dem gerichteten Licht ermittelt, bei dem das gerichtete Licht axial auf den Schattengeber trifft. In dieser Stellung ist der Kernschatten am schmalsten und die Flankensteigung am steilsten. Die steilste Flankensteigung wird ausgewählt und der Lichthärtebestimmung zugrunde gelegt.

Diffuses Licht erzeugt einen Halbschatten und direktes Licht einen Kernschatten. Beispielsweise wird dem Licht bei Existenz ausschließlich eines Halbschattens, also bei rein diffusem Licht, eine Lichthärte von -LH1, vorzugsweise -100 zugeordnet, und bei Existenz ausschließlich eines Kernschattens wird dem Licht eine Lichthärte von +LH2, vorzugsweise +100 zugeordnet. Es sind natürlich auch andere maximale und minimale Grenzwerte der Lichthärte denkbar. Es handelt sich bei dieser Festlegung um eine rein willkürliche Festlegung der Randwerte der Skala. Natürlich ist auch jede andere Zahlenangabe der Randwerte mitoffenbart. Minimale und maximale Grenzwerte können auch vertauscht sein. Die äußeren Werte müssen auch nicht symmetrisch um Null ausgebildet sein.

Zur Feststellung, ob auf einem bestimmten Fotoelement ein Halb- oder Kernschatten erzeugt wird, werden vorab Schwellenwerte der Beleuchtungsstärke ermittelt und in einen Speicher der Auswerteeinheit eingegeben. Wenn die Beleuchtungsstärke einen ersten Schwellenwert unterschreitet, liegt ein Kernschatten vor, wenn die Beleuchtungsstärke zwischen dem ersten Schwellenwert und einem zweiten, höheren Schwellenwert liegt, liegt ein Halbschatten vor, und wenn die Beleuchtungsstärke oberhalb des zweiten Schwellenwertes liegt, liegt kein Schatten vor. Der Messwert vorzugsweise jeder einzelnen Fotozelle wird mit den Schwellenwerten verglichen und entsprechend klassifiziert.

Sinnvolle Schwellenwerte sind 10 %, vorzugsweise 5 %, vorzugsweise 20 % für einen ersten Schwellenwert und 90 %, vorzugsweise 95 %, vorzugsweise 80 % für einen zweiten Schwellenwert, d. h. ein Kernschatten liegt vor, wenn weniger als 10 %, vorzugsweise weniger als 5 % vorzugsweise weniger als 20 % des Umgebungslichtes auf ein fotoempfindliches Element fallen, und ein Halbschatten liegt vor, wenn zwischen 10 % und 90 %, vorzugsweise zwischen 5 % und 95 %, vorzugsweise zwischen 20 % und 80 % der Beleuchtungsstärke des Umgebungslichtes auf ein anderes fotoempfindliches Element fallen. Es sind bei allen obigen Angaben auch die Zwischenwerte mitoffenbart. Wenn mehr als 90 % der Beleuchtungsstärke des Umgebungslichtes auf ein weiteres fotoempfindliches Element fallen, liegt kein Schatten vor.

Vor Durchführung einer Messung wird das Messgerät vorzugsweise geeicht, indem die Beleuchtungsstärke des Umgebungslichtes ohne Schattenbildung bestimmt wird. Dazu kann der Schattengeber vom Messgerät abgenommen werden, oder es können zur Messung der Beleuchtungsstärke nur die Bereiche der Sensorfläche berücksichtigt werden, auf denen kein Schatten erzeugt wird.

Die Beleuchtungsstärke des Umgebungslichtes wird mit 100 % angesetzt.

Es wird erfindungsgemäß eine Lichthärteskala erstellt, indem einem Quotienten-Verhältnis der Größe von Kern zu Halbschatten von 0 eine Lichthärte von -100 zugeordnet wird und einem Verhältnis von Kern zu Halbschatten von unendlich eine Lichthärte von +100 zugeordnet wird und einem Größenverhältnis von Kern zu Halbschatten von 1 eine Lichthärte von 0 zugeordnet wird. Die dazwischenliegenden Verhältnisse werden den Lichthärtewerten linear zugeordnet. Sie werden linear interpoliert.

Zur Ermittlung der Lichthärte an einem bestimmten Ort eines Raumes wird der Schattengeber vorzugsweise in Ein-Grad-Schritten um 180° gedreht, und in den sich aus den Schritten ergebenden Winkelabständen werden Messungen der Schatten der Lichthärte durchgeführt. Es wird für jede Stellung des Schattengebers ein gemittelter Wert der Lichthärten bestimmt und dieser als Lichthärte in dem bestimmten Bereich des Raumes festgehalten. Dadurch werden Winkelabhängigkeiten der Schattenbildung herausgefiltert.

Die Erfindung wird anhand eines Ausführungsbeispiels in acht Figuren beschrieben, dabei zeigen,
- Fig.1: perspektivische Ansicht eines erfindungsgemäßen Messgerätes zur Bestimmung einer Lichthärte,
- Fig.2: schematische Ansicht eines Schattengebers bei ausschließlich direktem Licht,
- Fig.3: Schatten eines Schattengebers bei direktem und diffusem Lichteinfall,
- Fig.4: Schatten eines Schattengebers bei ausschließlich diffusem Lichteinfall,
- Fig.5: Zuordnung von Lichthärtegraden zu verschiedenen Mischungen von diffusem und gerichtetem Licht,
- Fig. 6a: Auswertelinie entlang der Sensorfläche,
- Fig. 6b: Helligkeits-Orts-Kurve entlang der Messlinie in Fig. 6a bei diffusem Lichteinfall,
- Fig. 6c: Helligkeits-Orts-Kurve entlang der Messlinie in Fig. 6a bei gerichtetem Lichteinfall.

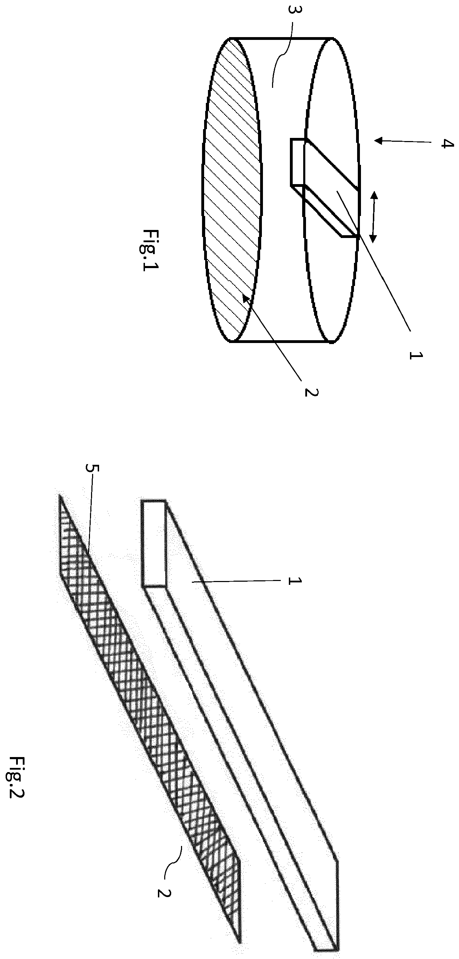

In Fig. 1 ist schematisch in einer seitlichen Ansicht eine Ausführungsform eines erfindungsgemäßen Messgerätes dargestellt. Das Messgerät dient zur Bestimmung der Lichthärte von Umgebungslicht.

Das Messgerät umfasst einen Schattengeber 1; der Schattengeber 1 ist in Form eines schmalen und dünnen Balkens ausgebildet, der lichtundurchlässig ist. Der Balken weist über seine Länge eine gleichbleibende Breite und Dicke auf. Der Schattengeber 1 dient dazu, einen Schatten auf eine Sensorfläche 2 zu werfen. Die Sensorfläche 2 ist als CCD Chip ausgebildet. Die Sensorfläche 2 ist kreisrund ausgeformt. Entlang des umlaufenden Randes des CCD Chips ist ein rohrförmiges Gehäuse 3 dargestellt, das am bodenseitigen Ende fest mit dem CCD Chip verbunden ist und an dessen gegenüberliegendem offenen Ende 4 der Schattengeber 1 drehbar relativ zum rohrförmigen Gehäuse 3 angeordnet ist, so dass der Schattengeber 1 an dem umlaufend rohrförmigen Gehäuse 3 nach rechts und links drehbar gelagert ist. Das rohrförmige Gehäuse 3 ist ebenfalls lichtundurchlässig.

In den Fig. 2 bis Fig. 3 ist die schematische Funktionsweise des Schattengebers 1 und der Sensorfläche 2 des CCD Chips dargestellt. Bei direktem Lichteinfall gemäß Fig. 1 erzeugt der Schattengeber 1 auf dem CCD Chip nur einen Kernschatten 5. Der Kernschatten 5 weist scharfe Grenzen auf. Die Kontur des Kernschattens 5 entspricht der des Schattengebers 1. Der Kernschatten 3 ist sehr dunkel. Die den Kernschatten 5 umgebende Sensorfläche 2 ist durch das auf die Sensorfläche 2 auftreffende gerichtete Licht weiter hell ausgeleuchtet. Das gerichtete Licht wird von dem Schattengeber im Bereich des Schattengebers aufgefangen und hinterlässt auf der Sensorfläche 2 den Kernschatten 5. Der Abstand des Schattengebers 1 von der Sensorfläche 2 beträgt hier etwa 0,5 cm, es sind natürlich auch andere Abmessungen denkbar. Insbesondere weist der Schattengeber 1 eine Länge von etwa 10 cm und eine Breite von etwa 5 cm auf.

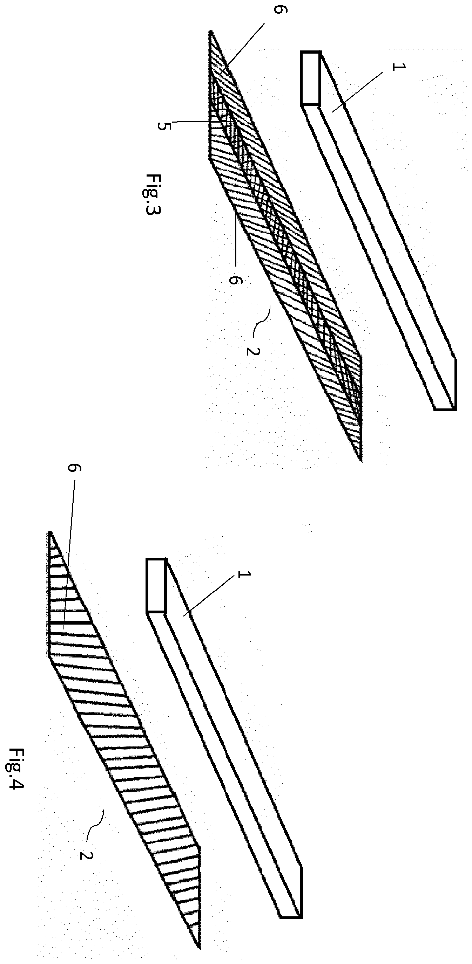

Fig. 3 zeigt den Schatten des Schattengebers 1 bei einer Mischung aus direktem und diffusem Licht in der Umgebung, d. h. am offenen Ende 4 des rohrförmigen Gehäuses 3 fällt diffuses und direktes Licht auf den Schattengeber 1, was zur Folge hat, dass auf der lichtabgewandten Seite auf der Sensorfläche 2 der schmale Kernschatten 5 und der breite Halbschatten 6 entstehen. Im Kernschatten 5 fällt sehr wenig Licht bis gar kein Licht auf die Sensorfläche 2. Im Halbschatten 6 fällt wenig Licht auf die Sensorfläche 2. Außerhalb der Schattens 5, 6 ist die Sensorfläche 2 überhaupt nicht abgeschattet. Eine Gesamtfläche aus dem Kernschatten 5 und dem Halbschatten 6 ist größer als eine parallel zur Sensorfläche 2 angeordnete Querschnittsfläche des Schattengebers 1.

In der Fig. 4 ist die Schattenbildung des Schattengebers 1 bei ausschließlich diffusem Licht dargestellt. Wenn diffuses Licht als Umgebungslicht verwendet wird, bildet sich auf der Sensorfläche 2 auf der dem diffusen Licht abgewandten Seite des Schattengebers 1 ausschließlich der Halbschatten 6 aus, der eine Fläche aufweist, die größer ist als eine Querschnittsfläche des Schattengebers 1. Aus dem Verhältnis der Fläche des Kernschattens 5 zur Fläche des Halbschattens 6 kann auf die Verteilung der Beleuchtungsstärke des direkten Lichtanteils zur Beleuchtungsstärke des diffusen Lichtanteils geschlossen werden.

Grundsätzlich wird unter hartem Licht direktes Licht verstanden und unter weichem Licht diffuses Licht. Sehr hartes Licht besteht daher ausschließlich aus direktem Licht, während sehr weiches Licht ausschließlich aus diffusem Licht besteht.

Zunächst werden zur Bestimmung des Vorliegens des Halbschattens 6 und des Kernschattens 5 Schwellenwerte festgelegt.

Die Sensorfläche 2 besteht aus einem CCD Chip, d. h. aus einer großen Anzahl lichtempfindlicher Halbleiterbauteile. Die pro Fläche erzeugte Menge an Ladungsträgern ist von der Beleuchtungsstärke E, die in Lux gemessen wird, abhängig und proportional zu ihr.

Zur Eichung des Messgerätes wird daher zunächst die Beleuchtungsstärke gemessen, wenn überhaupt keine Abschattung vorhanden ist. Dieses kann in den Bereichen der Sensorflächen ohne Abschattung geschehen, oder es kann vorgesehen sein, dass der Schattengeber 1 lösbar an dem Messgerät befestigt ist und zunächst zur Eichung des Gerätes abgenommen wird. Es wird dann die Beleuchtungsstärke des Umgebungslichtes gemessen.

Unter dem Kernschatten 5 wird eine Abschattung verstanden, bei der die pro Zeiteinheit erzeugte Menge an Ladungsträgern, also die Stromstärke unterhalb eines ersten tiefen Schwellenwertes liegt. Wenn die Beleuchtungsstärke des gemessenen Lichtes unterhalb eines zweiten Schwellenwertes und oberhalb des ersten Schwellenwertes liegt, wobei der zweite Schwellenwert höher als der erste Schwellenwert ist, liegt ein Halbschatten 6 vor.

Von dem Halbschatten 6 wird üblicherweise gesprochen, wenn die Beleuchtungsstärke des detektierten Lichtes zwischen 10 % bis 80 % der Beleuchtungsstärke des Umgebungslichtes liegt, von dem Kernschatten 5 wird gesprochen, wenn die Beleuchtungsstärke des detektierten Lichtes weniger als 10 % der Beleuchtungsstärke des Umgebungslichtes beträgt. Die genannten Schwellenwerte können aber auch anders gewählt werden.

Bei Beleuchtungsstärken von mehr als 80 % des Umgebungslichtes liegt keine Abschattung vor.

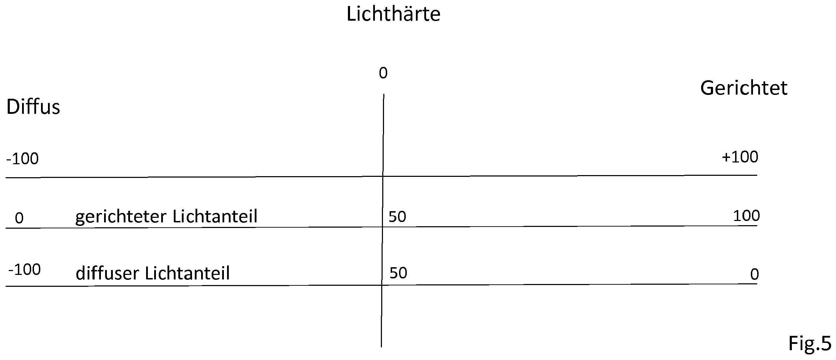

Grundsätzlich zerfällt das Umgebungslicht in einen direkten Lichtanteil und einen diffusen Lichtanteil. Eine Zuordnung gemäß Fig. 5 zeigt, dass bei einem ausschließlich diffusen Lichtanteil dem Licht insgesamt der Härtegrad -100 zugeordnet wird und bei einem ausschließlich gerichteten Lichtanteil wird dem Licht der Härtegrad +100 zugeordnet. Wenn die Intensitäten des gerichteten Lichtanteils und des diffusen Lichtanteils gleich sind, hat das Licht einen Härtegrad von 0. Die dazwischenliegenden Werte werden stetig interpoliert.

An den CCD Chip ist eine nicht dargestellte Auswerteeinheit angeschlossen, der die obengenannten Schwellenwerte einprogrammiert sind. Die Auswerteeinheit bestimmt aus den auf die Sensorfläche 2 fallenden Schatten 5, 6 sowohl die Fläche des Halbschattens 6 als auch die Fläche des Kernschattens 5. Das Größenverhältnis der Flächen des Kernschattens 5 zum Halbschatten 6 ist ein Maß für das Verhältnis vom direkten Lichtanteil zum diffusen Lichtanteil. Die Verhältnisse der Lichtanteile werden dem Härtegrad des Lichtes linear zugeordnet.

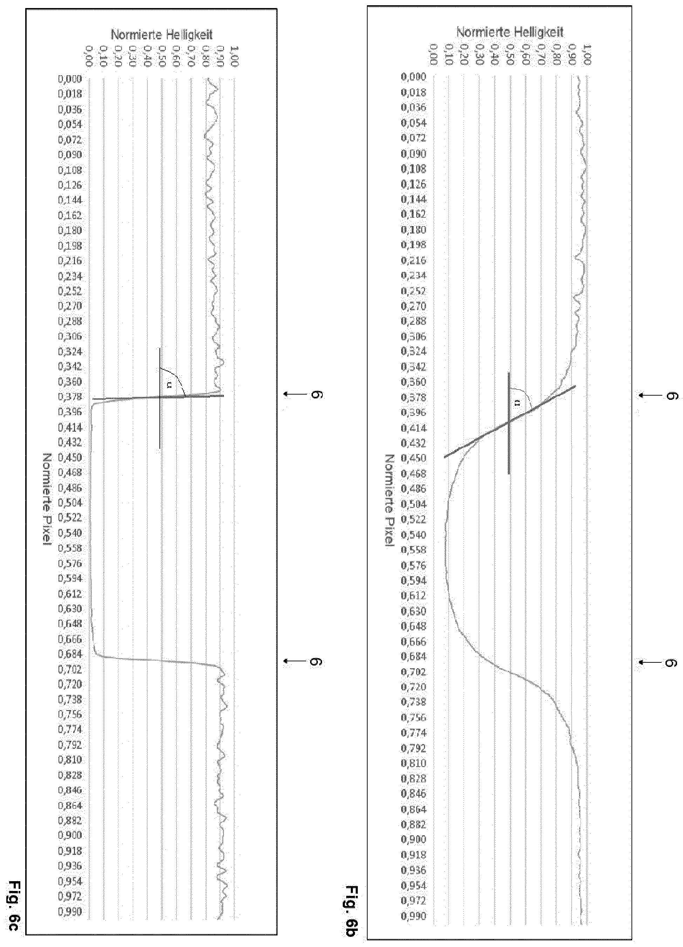

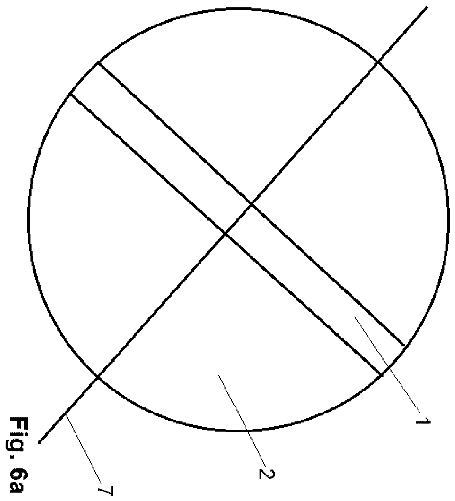

In der Figur 6a ist das Messgerät in einer Draufsicht dargestellt mit einer eingezeichneten Auswertelinie 7. Die Auswertelinie 7 ist in diesem Ausführungsbeispiel in einer Längsrichtung mittig am Schattengeber 1 angeordnet, sie könnte aber auch an anderen Positionen angeordnet sein. Auf der Sensorfläche 2 wird die Helligkeit entlang der Messlinie bestimmt. In den Figuren 6b, 6c sind die gemessenen Werte in Abhängigkeit von der Position entlang der Auswertelinie 7, also hier entlang des Durchmessers des Messgerätes, dargestellt, und zwar in der Graphik in Fig. 6b für diffuses Licht und in der Graphik in Fig. 6c für gerichtetes Licht. Es ist zu erkennen, dass bei diffusem Licht ein sehr breiter Halbschatten 6 mit einer flacheren Flankensteigung α ausgebildet wird, während die Flankensteigung α des Halbschattens 6 bei gerichtetem Licht deutlich steiler ist. Das Licht, das der Messung in Figur 6b zugrunde liegt, weist natürlich auch noch einen gerichteten Anteil auf. Die Flankensteigung α kann auf verschiedene, hier nicht näher dargestellte, Weise bestimmt werden. Beispielsweise könnte die Flankensteigung, wie in den Fig. 6b und 6c gezeigt, durch eine Tangente in der Mitte der Messkurve hinsichtlich des maximalen und minimalen Helligkeitswertes bestimmt werden. Es ist auch denkbar, dass die Steigung durch eine Linie zwischen zwei Messpunkten, die in etwa einen gleichen Abstand von der Mitte der Kurve im Abschnitt des Habschattens 6 aufweisen, bestimmt wird oder durch andere Verfahren. Durch ein in den Figuren 6a, 6b, 6c dargestelltes Verfahren lässt sich jedenfalls einem bestimmten Lichteinfall ein Zahlenwert in Form einer Flankensteigung α zuordnen. Die Messkurven in den Fig. 6b und 6c sind sowohl entlang der Ortsachse als auch entlang der Helligkeitsachse auf eins genormt. Unter Helligkeit wird die Beleuchtungsstärke verstanden.

Die Stellung des Schattengebers 1 in Figur 6a relativ zur Lichtquelle des gerichteten Lichtes wird in diesem Ausführungsbeispiel derart bestimmt, dass der Schattengeber in 180 Ein-Grad-Schritten gedreht wird und bei jedem Schritt eine Messkurve gemäß Figur 6b aufgenommen wird. Es wird dann der Auswertung des Halbschattens 6 eine dieser 180 Messkurven zu Grunde gelegt, nämlich diejenige, in der die Flankensteigung α am steilsten ist. Es ist auch denkbar, dass andere Auswerteverfahren zu Grunde gelegt werden, um eine Flankensteigung α zu ermitteln. Die Flankensteigung α liegt zwischen 0° für vollständig diffuses Licht und 90° für vollständig gerichtetes Licht. Die tatsächliche Flankensteigung α wird dann einem Wert der vorab ermittelten Lichthärteskala zugeordnet.

Die Lichthärteskala kann beispielsweise derart bestimmt werden, dass dem Wert 0° die Lichthärte 0 und dem Wert 90° die Lichthärte 100 zugeordnet werden und die Werte zwischen 0 und 100 linear auf die Werte zwischen 0° und 90° abgebildet werden. Es sind natürlich auch andere Zuordnungen denkbar.

### Bezugszeichenliste

- 1: Schattengeber
- 2: Sensorfläche
- 3: rohrförmiges Gehäuse
- 4: offenes Ende des rohrförmigen Gehäuses
- 5: Kernschatten
- 6: Halbschatten

## Patentansprüche

1. Messgerät mit
einer Lichtmesseinrichtung mit einer Sensorfläche (2) und mit einem Schattengeber (1), der gegenüber der Sensorfläche (2) in Schritten drehbar angeordnet ist, wobei durch den Schattengeber (1) ein Kern- und ein Halbschatten (5, 6) für jeden Schritt erzeugbar sind, und mit
einer Auswerteeinrichtung, die einen Datenspeicher umfasst und die datenleitend mit dem Datenspeicher verbunden ist, in dem eine Lichthärteskala abgelegt ist, wobei die Lichthärteskala teinen minimalen Grenzwert und einen maximalen Grenzwert aufweist, wobei dem minimalen Grenzwert diffuses Licht und dem maximalen Grenzwert gerichtetes Licht zugeordnet ist, und jeder Lichthärtewert zwischen den Grenzwerten einem bestimmten Anteilverhältnis von diffusem und gerichtetem Licht entspricht, Lieht, und die Auswerteeinrichtung datenleitend mit der Sensorfläche (2) verbunden ist, und die Sensorfläche (2) eine Vielzahl über die Sensorfläche (2) verteilter Sensoren aufweist, die jeweils eine Beleuchtungsstärke messen, und Beleuchtungsstärkemesswerte der Sensoren der Auswerteeinrichtung zuführbar sind, wobei die Auswerteeinrichtung einen Beleuchtungsstärkeverlauf entlang einer Messlinie (7) der Sensorfläche (2) für verschiedene Stellungen des Schattengebers (1) ermittelt, die Flankensteigung (α) entlang der Messlinie (7) des Beleuchtungsstärkeverlaufs der Halbschatten (6) ermittelt, die steilste Flankensteigung ermittelt, die steilste Flankensteigung auswählt, und einer Lichthärte innerhalb der Lichthärteskala zuordnet.

2. Messgerät nach Anspruch 1, mit einem Gehäuse (2) mit einem offenen Ende (4) für Umgebungslichteinfall und einem Boden, an dem die Sensorfläche (2) angeordnet ist, und einer Dreheinrichtung, an der der Schattengeber (1) angeordnet ist, der sich in dem offenen Ende (4) dreht.

3. Messgerät nach einem der vorstehenden Ansprüche, wobei die Sensorfläche (2) als CCD Sensorfläche ausgebildet ist.

4. Verfahren zur Bestimmung einer Lichthärte, indem
eine Lichthärteskala bestimmt wird, indem ein minimaler Grenzwert und ein maximaler Grenzwert festgelegt werden und dem minimalen Grenzwert diffuses Licht und dem maximalen Grenzwert gerichtetes Licht zugeordnet wird und jeder Lichthärtewert zwischen den Grenzwerten einem bestimmten Anteilverhältnis von diffusem und gerichtetem Licht entspricht, die Lichthärteskala in einem Speicher einer Auswerteeinrichtung abgelegt wird,
ein Schatten durch einen gegenüber einer Sensorfläche (2) drehbar angeordneten Schattengeber (1) erzeugt wird, indem der Schattengeber (1) in Schritten gedreht wird und für jeden der Schritte ein Halbschatten erzeugt wird, die Sensorfläche (2) eine Vielzahl über die Sensorfläche (2) verteilter Sensoren aufweist, die jeweils eine Beleuchtungsstärke messen, und Beleuchtungsstärkemesswerte der Sensoren der Auswerteeinrichtung zugeführt werden, die einen Beleuchtungsstärkeverlauf entlang einer Messlinie (7) der Sensorfläche (2) ermittelt, und eine Flankensteigung (α) entlang der Messlinie (7) des Beleuchtungsstärkeverlaufs des Halbschattens (6) ermittelt, die Flankensteigung für jeden der Halbschatten bestimmt, die steilste Flankensteigung ermittelt, die steilste Flankensteigung auswählt, und einer Lichthärte zuordnet.

5. Verfahren nach Anspruch 4, in dem ein erster und ein zweiter Schwellenwert einer Beleuchtungsstärke festgelegt werden und die Beleuchtungsstärke unterhalb des ersten Schwellenwerts an einer Fotozelle als der Kernschatten (5) und die Beleuchtungsstärke an einer anderen Fotozelle zwischen dem ersten und dem zweiten Schwellenwert als der Halbschatten (6) und die Beleuchtungsstärke an einer weiteren Fotozelle oberhalb des zweiten Schwellenwertes als schattenfrei klassifiziert wird.

6. Verfahren nach einem der Ansprüche 4 bis 5, wobei eine CCD Sensorfläche (2) mit Fotozellen verwendet wird.

7. Verfahren nach einem der Ansprüche 4 bis 6, wobei die Beleuchtungsstärke auf der Sensorfläche (2) bei Schattenfreiheit bestimmt wird und der schattenfreie Messwert als 100 % Beleuchtungsstärkenmesswert angesehen wird und die Messungen darauf geeicht werden.

## Claims

1. Measuring device with
a light measuring device having a sensor surface (2) and having a shadow generator (1) which is arranged rotatably in steps with respect to the sensor surface (2), it being possible for the shadow generator (1) to generate a core shadow (5) and a penumbra (6) for each step, and having
an evaluation unit which comprises a data storage device and which is connected to the data storage device in a data-conducting manner, in which a light hardness scale is stored, the light hardness scale having a minimum limit value and a maximum limit value, diffuse light being assigned to the minimum limit value and directional light being assigned to the maximum limit value, and each light hardness value between the limit values corresponding to a specific proportion ratio of diffuse and directional light, and the evaluation unit is connected to the sensor surface (2) in a data-conducting manner, and the sensor surface (2) has a multiplicity of sensors which are distributed over the sensor surface (2) and each measure an illuminance, and illuminance measurement values of the sensors can be fed to the evaluation unit, wherein the evaluation unit determines a course of illuminance along a measuring line (7) of the sensor surface (2) for different positions of the shadow generator (1), determines the ascending slope (α) along the measuring line (7) of the course of illuminance of the penumbra (6), determines the steepest ascending slope, selects the steepest ascending slope, and assigns it to a light hardness within the light hardness scale.

2. Measuring device according to claim 1,
comprising a housing (2) having an open end (4) for ambient light incidence and a bottom on which the sensor surface (2) is arranged, and a rotating means on which the shadow generator (1) is arranged, which rotates in the open end (4).

3. Measuring device according to one of the preceding claims,
wherein the sensor surface (2) is formed as a CCD sensor surface.

4. Method for determining a light hardness wherein
a light hardness scale is defined by defining a minimum limit value and a maximum limit value and assigning diffuse light to the minimum limit value and directional light to the maximum limit value and each light hardness value between the limit values corresponding to a specific proportion ratio of diffuse and directional light, the light hardness scale being stored in a data storage of an evaluation device,
a shadow being generated by a shadow generator (1) arranged rotatably relative to a sensor surface (2) by rotating the shadow generator (1) in steps and a penumbra for each of the steps is generated, the sensor surface (2) having a plurality of sensors distributed over the sensor surface (2), each of which sensors measures an illuminance, and illuminance measurement values of the sensors being supplied to the evaluation device, which determines an illuminance profile along a measuring line (7) of the sensor surface (2), and determines an ascending slope (α) along the measuring line (7) of the illuminance profile of the penumbra (6), determines the ascending slope for each of the penumbra, determines the steepest ascending slope, selects the steepest ascending slope and assigns it to a light hardness.

5. The method of claim 4,
in which a first and a second threshold value of an illuminance are determined and the illuminance below the first threshold value at a photocell is classified as the core shadow (5) and the illuminance at another photocell between the first and the second threshold value is classified as the penumbra (6) and the illuminance at another photocell above the second threshold value is classified as shadow-free.

6. Method according to any one of claims 4 to 5,
wherein a CCD sensor surface (2) with photocells is used.

7. Method according to any one of claims 4 to 6,
wherein the illuminance on the sensor surface (2) is determined when there is no shadow and the shadow-free measured value is regarded as 100% illuminance measured value and the measurements are calibrated thereon.

## Revendications

1. Appareil de mesure avec
un dispositif de mesure de la lumière avec une surface de détection (2) et avec un générateur d'ombre (1) qui est placé rotatif par pas par rapport à la surface de détection (2), un noyau d'ombre et une demi-ombre (5, 6) pouvant être générés pour chaque pas par le générateur d'ombre (1) et avec
un dispositif d'évaluation qui comprend une mémoire de données et qui est relié à la mémoire de données en transférant des données, mémoire de données dans laquelle une échelle de dureté de la lumière est mémorisée, cependant que l'échelle de dureté de la lumière présente un seuil minimal et un seuil maximal, la lumière diffuse étant associée au seuil minimal et la lumière orientée au seuil maximal et chaque valeur de dureté de la lumière entre les seuils correspondant à un certain rapport de taux de lumière diffuse et de lumière orientée et l'unité d'évaluation étant reliée à la surface de détection en transférant des données et la surface de détection (2) présentant une multitude de détecteurs répartis sur la surface de détection (2) qui mesurent chacun une intensité lumineuse et des valeurs mesurées d'intensité lumineuse des détecteurs pouvant être amenées au dispositif d'évaluation, cependant que l'unité d'évaluation détermine un tracé d'intensité lumineuse le long d'une ligne de mesure (7) de la surface de détection (2) pour différentes positions du générateur d'ombre (1), détermine l'inclinaison des flancs (α) le long de la ligne de mesure (7) du tracé d'intensité lumineuse des demi-ombres (6), détermine l'inclinaison de flancs la plus raide, sélectionne l'inclinaison de flancs la plus raide et l'associe à une dureté de lumière à l'intérieur de l'échelle de dureté de la lumière.

2. Appareil de mesure selon la revendication 1 avec un bâti (2) avec une extrémité ouverte (4) pour l'incidence de la lumière ambiante et un fond sur lequel la surface de détection (2) est placée, et avec un dispositif rotatif sur lequel le générateur d'ombre (1), qui tourne dans l'extrémité ouverte (4), est placé.

3. Appareil de mesure selon l'une des revendications précédentes, la surface de détection (2) étant configurée comme une surface de détection CCD.

4. Procédé pour déterminer une dureté de lumière, une échelle de dureté de la lumière étant déterminée, un seuil minimal et un seuil maximal étant fixés et la lumière diffuse étant associée au seuil minimal et la lumière orientée au seuil maximal et chaque valeur de dureté de la lumière entre les seuils correspondant à un certain rapport de taux de lumière diffuse et de lumière orientée, l'échelle de dureté de la lumière étant mémorisée dans une mémoire d'un dispositif d'évaluation, une ombre étant générée par un générateur d'ombre (1) placé rotatif par rapport à une surface de détection (2), le générateur d'ombre (1) étant tourné en pas et une demi-ombre étant générée pour chacun des pas, la surface de détection (2) présentant une multitude de détecteurs répartis sur la surface de détection (2) qui mesurent chacun une intensité lumineuse, et des valeurs mesurées d'intensité lumineuse des détecteurs pouvant être amenées au dispositif d'évaluation qui détermine un tracé d'intensité lumineuse le long d'une ligne de mesure (7) de la surface de détection (2) et une inclinaison des flancs (a) le long de la ligne de mesure (7) du tracé d'intensité lumineuse de la demi-ombre (6), détermine l'inclinaison de flancs pour chacune des demi-ombres, détermine l'inclinaison de flancs la plus raide, sélectionne l'inclinaison de flancs la plus raide et l'associe à une dureté de lumière.

5. Procédé selon la revendication 4, un premier et un second seuil d'une intensité lumineuse étant fixés et l'intensité lumineuse au-dessous du premier seuil sur une cellule photoélectrique étant classée comme le noyau d'ombre (5) et l'intensité lumineuse sur une autre cellule photoélectrique entre le premier et le second seuil étant classée comme la demi-ombre (6) et l'intensité lumineuse sur une autre cellule photoélectrique au-dessus du second seuil étant classée comme ne présentant aucune ombre.

6. Procédé selon l'une des revendications 4 à 5, cependant qu'une surface de détection CCD (2) avec des cellules photoélectriques est utilisée.

7. Procédé selon l'une des revendications 4 à 6, cependant que l'intensité lumineuse est déterminée sur la surface de détection (2) en absence d'ombre et la valeur mesurée sans ombre est considérée comme valeur mesurée d'intensité lumineuse de 100% et les mesures sont calibrées sur cette valeur.
